# EUROPEAN PATENT APPLICATION

(11) **EP 4 180 231 A2**
(43) Date of publication of application: **17.05.2023**
(21) Application number: 22203929.9
(22) Date of filing: 26.10.2022
(51) Int. Cl.: B41J 2/04, B22F 10/22

(54) **LIQUID METAL EJECTOR DUAL SENSOR SYSTEM AND METHODS THEREOF**

(30) Priority: 15.11.2021 US 202117454926
(71) Applicant: Xerox Corporation, Webster, NY 14580 (US)
(72) Inventor: HERRMANN, Douglas K., Webster, 14580 (US); PRAHARAJ, Seemit, Webster, 14580 (US); LEFEVRE, Jason M., Webster, 14580 (US)
(74) Representative: Gill Jennings & Every LLP

(57) **Abstract**

A metal ejecting apparatus is disclosed. The metal ejecting apparatus includes a nozzle orifice in connection with the inner cavity and configured to eject one or more droplets of a liquid metal may include the metal printing material, and a first sensor pair in contact with an internal surface of a lower portion of the inner cavity. Each sensor pair is electrically connected to a printing material feed system where the printing material feed system is configured to receive an electrical signal indicative of an electrical connection from each sensor pair when the metal printing material bridges the electrical connection between each sensor in each sensor pair. A method of controlling level in a metal jetting apparatus is also disclosed.

## Description

### Technical Field

The present teachings relate generally to liquid ejectors in drop-on-demand (DOD) printing and, more particularly, to a conductivity-based level sensing system and methods for use within a liquid metal ejector of a DOD printer.

### Background

A drop-on-demand (DOD) or three-dimensional (3D) printer builds (e.g., prints) a 3D object from a computer-aided design (CAD) model, usually by successively depositing material layer upon layer. A drop-on-demand (DOD) printer, particularly one that prints a metal or metal alloy, ejects a small drop of liquid aluminum alloy when a firing pulse is applied. Using this technology, a 3D part can be created from aluminum or another alloy by ejecting a series of drops which bond together to form a continuous part. For example, a first layer may be deposited upon a substrate, and then a second layer may be deposited upon the first layer. One particular type of 3D printer is a magnetohydrodynamic (MHD) printer, which is suitable for jetting liquid metal layer upon layer which bond together to form a 3D metallic object. Magnetohydrodynamic refers to the study of the magnetic properties and the behavior of electrically conducting fluids.

In MHD printing, a liquid metal is jetted out through a nozzle of the 3D printer onto a substrate or onto a previously deposited layer of metal. A printhead used in such a printer is a single-nozzle head and includes several internal components within the head which may need periodic replacement. In some instances, a typical period for nozzle replacement may be an 8-hour interval. During the liquid metal printing process, the aluminum and alloys, and in particular, magnesium containing alloys, can form oxides and silicates during the melting process in the interior of the pump. These oxides and silicates are commonly referred to as dross. The buildup of dross is a function of pump throughput and builds continuously during the print process. In addition to being composed of a combination of aluminum and magnesium oxides and silicates, the dross may also include gas bubbles. Consequently, the density of the dross may be lower than that of the liquid metal printing material and the dross may build at the top of the melt pool, eventually causing issues during printing. Certain DOD printers use, for example, a non-contact red-semiconductor laser sensor, operating at an approximate wavelength of 660nm, for measuring the melt pool height during printing. This is commonly referred to as a level-sensor. Dross accumulation while printing impacts the ability of the level-sensor to accurately measure the molten metal level of the pump and may lead to prematurely ending the print job. This may also cause the pump to erroneously empty during printing, thereby ruining the part. Dross plugs may also grow within the pump causing issues with the pump dynamics resulting in poor jet quality and additional print defects, such as the formation of satellite drops during printing. The dross could potentially break apart and a chunk of this oxide falls into the nozzle resulting in a clogged nozzle. When the level sense signal "drops out," this can cause a catastrophic failure condition, leading to printer shut down, requiring clearing or removal of the dross plug, replacing the print nozzle, and beginning start-up procedures again.

Thus, a method of and apparatus for level sense control in a metal jet printing drop-on-demand or 3D printer is needed to provide longer printing times and higher throughput without interruption from defects or disadvantages associated with dross build-up.

### Summary

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

A metal ejecting apparatus is disclosed. The metal ejecting apparatus includes a nozzle orifice in connection with the inner cavity and configured to eject one or more droplets of a liquid metal may include the metal printing material, and a first sensor pair in contact with an internal surface of a lower portion of the inner cavity.

The metal ejecting apparatus may include where each sensor in the first sensor pair is positioned on a first equivalent horizontal plane. The metal ejecting apparatus may include a second sensor pair in contact with an internal surface of an upper portion of the inner cavity. Each sensor in the second sensor pair is positioned on a second equivalent horizontal plane. The first sensor pair and the second sensor pair are fixedly attached to the structure defining the inner cavity. The first sensor pair may include a non-wetting material when in contact with the liquid metal and the second sensor pair may include a non-wetting material when in contact with the liquid metal. The non-wetting material on the first sensor pair may include boron nitride and non-wetting material on the second sensor pair may include boron nitride. The second sensor pair is electrically connected to a printing material feed system. In certain implementations, a printing material feed system is configured to receive a first electrical signal indicative of an electrical connection from the first sensor pair when the metal printing material bridges the electrical connection between each sensor in the first sensor pair, and the printing material feed system is configured to receive a second electrical signal indicative of an electrical connection from the second sensor pair when the metal printing material bridges the electrical connection between each sensor in the first sensor pair. The metal ejecting apparatus may include a heating element configured to heat a solid in the inner cavity of the metal ejecting apparatus, thereby causing the solid to change to a liquid within the metal ejecting apparatus. The metal ejecting apparatus may include a coil wrapped at least partially around the metal ejecting apparatus; and a power source configured to supply one or more pulses of power to the coil, which cause one or more droplets of liquid metal to be jetted out of the nozzle orifice. The first sensor pair is electrically connected to a printing material feed system. The metal ejecting apparatus may include a discrete and separable upper pump segment and a discrete and separable lower pump segment. The first sensor pair is fixedly attached to the upper pump segment. The upper pump segment may include boron nitride. The lower pump segment may include graphite.

Another metal ejecting apparatus is disclosed. The metal ejecting apparatus also includes a nozzle orifice in connection with the inner cavity and configured to eject one or more droplets of a liquid metal may include the metal printing material, a first sensor pair in contact with an internal surface of the inner cavity and fixedly attached to a lower portion of the upper pump segment, and a second sensor pair in contact with an internal surface of the inner cavity and fixedly attached to an upper portion of the upper pump segment.

Implementations of the metal ejecting apparatus may include a heating element configured to heat a solid in the inner cavity of the metal ejecting apparatus, thereby causing the solid to change to a liquid within the metal ejecting apparatus, and a coil wrapped at least partially around the metal ejecting apparatus, and a power source configured to supply one or more pulses of power to the coil, which cause one or more droplets of liquid metal to be jetted out of the nozzle orifice. In certain implementations, each sensor in the first sensor pair is positioned on first equivalent horizontal plane, and each sensor in the second sensor pair is positioned on a second equivalent horizontal plane. The upper pump segment may include boron nitride. The lower pump segment may include graphite.

A method of controlling level in a metal jetting apparatus is also disclosed. The method of controlling level in a metal jetting apparatus also includes receiving a first electrical signal from a first sensor pair in contact with an internal surface of a lower portion of an inner cavity of the metal jetting apparatus, initiating a feed mechanism of a solid printing material into the inner cavity of the metal jetting apparatus when the first electrical signal is not indicative of an electrical connection between each sensor in the first sensor pair, receiving a second electrical signal from a second sensor pair in contact with an internal surface of an upper portion of the inner cavity of the metal jetting apparatus, and pausing the feed mechanism of the solid printing material into the inner cavity of the metal jetting apparatus when the second electrical signal is indicative of an electrical connection between each sensor in the second sensor pair.

Implementations of the method of controlling level in a metal jetting apparatus may include initiating the feed mechanism of the solid printing material into the inner cavity of the metal jetting apparatus when the second electrical signal is not indicative of electrical connection between each sensor in the second sensor pair. The method of controlling level in a metal jetting apparatus may include continuing the feed mechanism of the solid printing material into the inner cavity of the metal jetting apparatus when the first electrical signal is indicative of electrical connection between each sensor in the first sensor pair and the second electrical signal is not indicative of electrical connection between each sensor in the second sensor pair. The printing material may include a metal, a metallic alloy, or a combination thereof. The printing material may include aluminum. Implementations of the method of controlling level in a metal jetting apparatus may include where the first electrical signal is indicative of electrical connection between each sensor in the first sensor pair when in contact with a molten metal printing material, and the first electrical signal is not indicative of electrical connection between each sensor in the first sensor pair when not in contact with the molten metal printing material. Implementations of the method of controlling level in a metal jetting apparatus may include where the second electrical signal is indicative of electrical connection between each sensor in the second sensor pair when in contact with a molten metal printing material, and the second electrical signal is not indicative of electrical connection between each sensor in the second sensor pair when not in contact with the molten metal printing material.

### Brief Description of the Drawings

The accompanying drawings, which are incorporated in and constitute a part of this specification, illustrate embodiments of the present teachings and together with the description, serve to explain the principles of the disclosure. In the figures:
FIG. 1 depicts a schematic cross-sectional view of a single liquid metal ejector jet of a 3D printer (e.g., a MHD printer and/or multi-jet printer), according to an embodiment.
FIG. 2 is a side cross-sectional views of a liquid metal ejector contaminated with dross, according to an embodiment.
FIG. 3 is a side cross-sectional view of a liquid metal ejector including a level sensor system, according to an embodiment.
FIGS. 4A and 4B illustrate perspective views of a liquid metal ejector assembly with and without a heater, respectively, according to an embodiment.
FIG. 5 is a top perspective view of a liquid metal ejector assembly with a heater, according to an embodiment.
FIG. 6 is a side perspective view, with a cutaway, of a liquid metal ejector assembly with a heater, according to an embodiment.
FIG. 7 is a flowchart illustrating a method of level sensing in a liquid metal ejector of a metal jetting printer, according to an embodiment.

It should be noted that some details of the figures have been simplified and are drawn to facilitate understanding of the present teachings rather than to maintain strict structural accuracy, detail, and scale.

### Detailed Description

Reference will now be made in detail to exemplary embodiments of the present teachings, examples of which are illustrated in the accompanying drawings. Wherever possible, the same reference numbers will be used throughout the drawings to refer to the same, similar, or like parts.

In metal jet printers employing a drop-on-demand printing methodology and technology, a small drop of liquid aluminum alloy or other metal is ejected when a firing pulse is applied. Using this technology, a three-dimensional (3D) part can be created from aluminum alloy or another metal by ejecting a series of drops which bond together to form a continuous part. The print-head, or metal ejector jet, used in exemplary printers is a single-nozzle head and certain internal components within the head need periodic replacement. A typical period for nozzle replacement may be on the order of an 8-hour interval. During the metal jet printing process the aluminum and components of the alloys, in particular magnesium, can form oxides during the melting process on the inlet and in the inner cavity of the pump, which is commonly referred to as "dross." This dross builds up in the inner cavity and other areas of the ejector pump during printing and is a function of printing material throughput through the pump. The dross, in the case of aluminum printing material, is a combination of aluminum oxide, magnesium oxide, aluminum and gas bubbles. The dross builds in the top of the melt pool that resides in the metal ejector pump and causes issues during printing. Exemplary printing systems employ a red-semiconductor laser (660 nm wavelength) non-contact sensor for measuring the melt pool height during printing, and thus is an effective level sensor for the metal jet printing system. Dross accumulation while printing impacts the ability of the level sensor to accurately measure the molten metal level of the pump and leads to prematurely ending the print job. When the level sense signal "drops out" it leads to shutting down the machine, clearing or removing the dross plug, replacing the print nozzle, and beginning the start-up procedure again. This may result in an incomplete part or premature shutdown of a printing operation.

Exemplary embodiments of the present disclosure include a conductive sensing and control system for ensuring proper molten aluminum levels in the upper pump. The sensors are located such that there is an upper and lower bound that can detect the electrical conductivity of the molten aluminum to identify fluid level within the pump. Two sets or pairs of conductive probes make contact when bridged by molten aluminum in the pump identifying if the aluminum is above the topmost limit, below the lower limit or in the nominal range between the upper and lower limits. The height of the top level of the aluminum is maintained within the nominal range via both an open and closed loop system connecting the printing material wire feed and the level sensing systems. This level sensing system provides level sensing for the molten printing material in the upper pump area of the ejector that is robust to dross buildup within the system. Whereas the laser level sensing system is negatively affected by dross buildup on the top of the molten printing material, the conductive sensing solution detects the molten printing material via the conducting of the printing material itself. To maintain the printing material level, it is necessary to ensure the printing material feed maintains a molten printing material level that does not either fall below a minimum level or rise above a maximum level. To achieve this a high-level sensing set and low-level sensing sensor set of conductive sensors are placed at the high level and low level of the pump, or metal ejector. The sensor sets are made up of two horizontally spaced conductive sensors that when they are submerged in the liquid detect the presence of the molten aluminum via the conductive path the aluminum creates between the discreet and horizontally separated sensors within each set. Each sensor pair is positioned on an equivalent horizontal plane and in contact with an internal surface of the inner cavity of the ejector jet system. When no set of sensors indicate conductivity, this indicates the printing material level is below the lower limit and additional solid printing material must be added via the wire feed or in the case no printing material is available the system shut down for inspection and reloading wire if necessary. If the lower set of sensors is indicating conductivity while the top set is not indicating conductivity, the printing material level is being maintained between the upper and lower sensor sets or nominal operating condition. This level is maintained through and open loop feed system that calculates printing material used during printing and printing material feed rate. If at any time the upper set of sensors indicate conductivity the printing material wire feed is stopped. The conductivity has indicated that printing material is above the upper most limit. Once the sensors are not showing conductivity the open loop feed of the printing material wire resumes. These sensing sets and algorithm maintain printing material level in conjunction with the open loop wire feed to ensure the printing material levels are maintained to nominal fill height even with the presence of dross that would otherwise interfere with a laser height measurement.

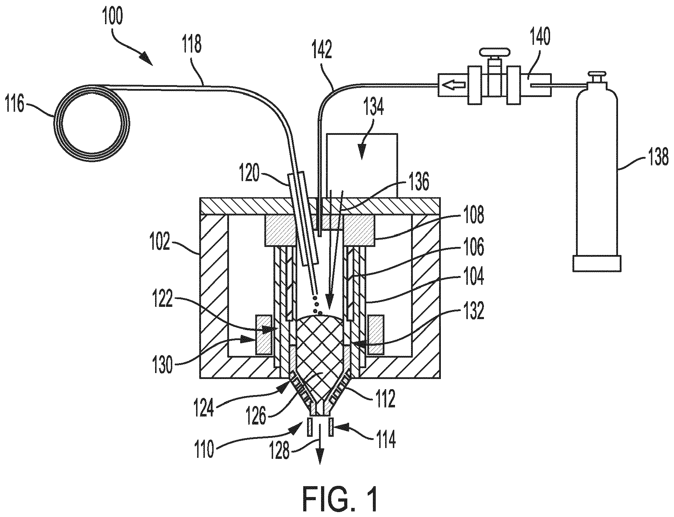

FIG. 1 depicts a schematic cross-sectional view of a single liquid metal ejector jet of a 3D printer (e.g., a MHD printer and/or multi-jet printer), according to an embodiment. FIG. 1 shows a portion of a type of drop-on-demand (DOD) or three-dimensional (3D) printer 100. The 3D printer or liquid ejector jet system 100 may include an ejector (also referred to as a body or pump chamber, or a "one-piece" pump) 104 within an outer ejector housing 102, also referred to as a lower block. The ejector 104 may define an inner volume 132 (also referred to as an internal cavity or an inner cavity). A printing material 126 may be introduced into the inner volume 132 of the ejector 104. The printing material 126 may be or include a metal, a polymer, or the like. For example, the printing material 126 may be or include aluminum or aluminum alloy, introduced via a printing material supply 116 or spool of a printing material wire feed 118, in this case, an aluminum wire. The liquid ejector jet system 100 further includes a first inlet 120 within a pump cap or top cover portion 108 of the ejector 104 whereby the printing material wire feed 118 is introduced into the inner volume 132 of the ejector 104. The ejector 104 further defines a nozzle 110, an upper pump 122 area and a lower pump 124 area. One or more heating elements 112 are distributed around the pump chamber 104 to provide an elevated temperature source and maintain the printing material 126 in a molten state during printer operation. The heating elements 112 are configured to heat or melt the printing material wire feed 118, thereby changing the printing material wire feed 118 from a solid state to a liquid state (e.g., printing material 126) within the inner volume 132 of the ejector 104. The three-dimensional 3D printer 100 and ejector 104 may further include an air or argon shield 114 located near the nozzle 110, and a water coolant source 130 to further enable nozzle and/or ejector 104 temperature regulation. The liquid ejector jet system 100 further includes a level sensor 134 system which is configured to detect the level of molten printing material 126 inside the inner volume 132 of the ejector 104 by directing a detector beam 136 towards a surface of the printing material 126 inside the ejector 104 and reading the reflected detector beam 136 inside the level sensor 134.

The 3D printer 100 may also include a power source, not shown herein, and one or more metallic coils 106 enclosed in a pump heater that are wrapped at least partially around the ejector 104. The power source may be coupled to the coils 106 and configured to provide an electrical current to the coils 106. An increasing magnetic field caused by the coils 106 may cause an electromotive force within the ejector 104, that in turn causes an induced electrical current in the printing material 126. The magnetic field and the induced electrical current in the printing material 126 may create a radially inward force on the printing material 126, known as a Lorenz force. The Lorenz force creates a pressure at an inlet of a nozzle 110 of the ejector 104. The pressure causes the printing material 126 to be jetted through the nozzle 110 in the form of one or more liquid drops 128.

The 3D printer 100 may also include a substrate, not shown herein, that is positioned proximate to (e.g., below) the nozzle 110. The ejected drops 128 may land on the substrate and solidify to produce a 3D object. The 3D printer 100 may also include a substrate control motor that is configured to move the substrate while the drops 128 are being jetted through the nozzle 110, or during pauses between when the drops 128 are being jetted through the nozzle 110, to cause the 3D object to have the desired shape and size. The substrate control motor may be configured to move the substrate in one dimension (e.g., along an X axis), in two dimensions (e.g., along the X axis and a Y axis), or in three dimensions (e.g., along the X axis, the Y axis, and a Z axis). In another embodiment, the ejector 104 and/or the nozzle 110 may be also or instead be configured to move in one, two, or three dimensions. In other words, the substrate may be moved under a stationary nozzle 110, or the nozzle 110 may be moved above a stationary substrate. In yet another embodiment, there may be relative rotation between the nozzle 110 and the substrate around one or two additional axes, such that there is four or five axis position control. In certain embodiments, both the nozzle 110 and the substrate may move. For example, the substrate may move in X and Y directions, while the nozzle 110 moves up and/or down in a Y direction.

The 3D printer 100 may also include one or more gas-controlling devices, which may be or include a gas source 138. The gas source 138 may be configured to introduce a gas. The gas may be or include an inert gas, such as helium, neon, argon, krypton, and/or xenon. In another embodiment, the gas may be or include nitrogen. The gas may include less than about 10% oxygen, less than about 5% oxygen, or less than about 1% oxygen. In at least one embodiment, the gas may be introduced via a gas line 142 which includes a gas regulator 140 configured to regulate the flow or flow rate of one or more gases introduced into the three-dimensional 3D printer 100 from the gas source 138. For example, the gas may be introduced at a location that is above the nozzle 110 and/or the heating element 112. This may allow the gas (e.g., argon) to form a shroud/sheath around the nozzle 110, the drops 128, the 3D object, and/or the substrate to reduce/prevent the formation of oxide (e.g., aluminum oxide) in the form of an air shield 114. Controlling the temperature of the gas may also or instead help to control (e.g., minimize) the rate that the oxide formation occurs.

The liquid ejector jet system 100 may also include an enclosure 102 that defines an inner volume (also referred to as an atmosphere). In one embodiment, the enclosure 102 may be hermetically sealed. In another embodiment, the enclosure 102 may not be hermetically sealed. In one embodiment, the ejector 104, the heating elements 112, the power source, the coils, the substrate, additional system elements, or a combination thereof may be positioned at least partially within the enclosure 102. In another embodiment, the ejector 104, the heating elements 112, the power source, the coils, the substrate, additional system elements, or a combination thereof may be positioned at least partially outside of the enclosure 102. While the liquid ejector jet system 100 shown in FIG. 1 is representative of a typical liquid ejector jet system 100, locations and specific configurations and/or physical relationships of the various features may vary in alternate design embodiments.

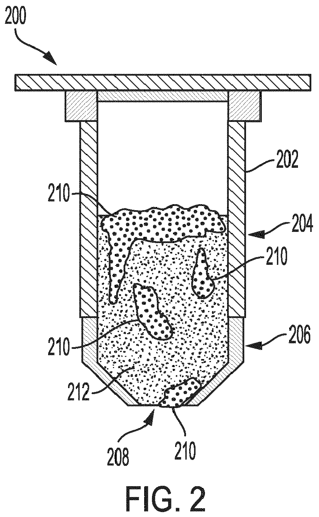

FIG. 2 is a side cross-sectional views of a liquid metal ejector contaminated with dross, according to an embodiment. The ejector 200 is shown, which further defines a cavity or outer wall 202 of the ejector, an upper pump area 204, a lower pump area 206, and an outlet nozzle 208. Within the inner cavity 202 of the ejector 200 is further shown a molten printing material 212 and schematic of dross 210 build-up within and on top of the printing material 212. The dross 210, in certain embodiments, and dependent upon which printing material is used in the printing system, is a combination of aluminum oxides, magnesium oxides, and silicates. The dross 210 may also include gas bubbles. In certain embodiments, the dross 210, may include additional materials or contaminants, such as oxides and silicates of aluminum (Al), calcium (Ca), magnesium (Mg), silicon (Si), iron (Fe), or possibly air bubbles or other contaminants containing sodium (Na), potassium (K), sulfur (S), chlorine (CI), carbon (C) or combinations thereof, The dross 210 typically builds towards the top of the melt pool that resides near the upper pump area 204 in the ejector 200 and may potentially cause issues during printing. Dross 210 accumulation may potentially impact the ability of the aforementioned level sensor that measures the molten metal level inside the ejector 200. An erroneous signal for the level sensor system can cause the pump to empty during printing, which could result in ruining the part being printed. One or more dross 210 "plugs" may also have a propensity to grow within the pump, which in turn may cause issues with the pump dynamics. Interruptions or issues in pump dynamics may further result in poor jet quality and the formation of satellite drops during printing. A satellite drop may refer to a drop with only a fraction of the volume of the main drop which can be unintentionally formed during the jetting of a main drop. For example, a physical occlusion at the nozzle is one potential cause resulting in the formation of a satellite drop. In certain embodiments or instances, the dross 210 could also potentially break apart, and a portion of this fragmented dross or oxide may fall into the nozzle 208 resulting in a clogged nozzle 208. Any failure arising from the accumulation of dross 210 has the tendency to be catastrophic, which could lead to necessitating a shutdown of the printer, having to clear or remove the dross 210 plug, replacing the print nozzle, beginning start-up again, or combinations thereof. It should be noted that additional features or elements of the printer or ejector system are not depicted in FIG. 2 for purposes of clarity.

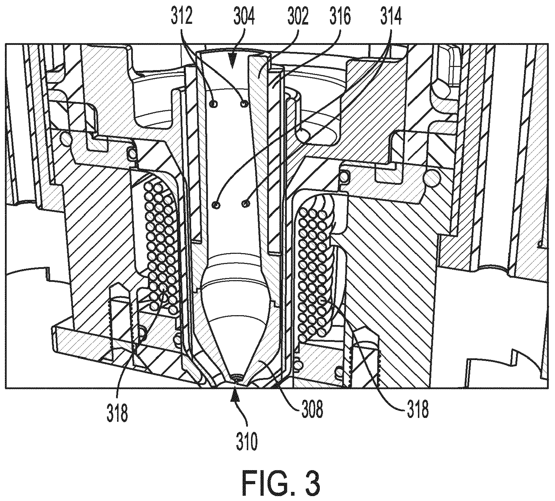

FIG. 3 is a side cross-sectional view of a liquid metal ejector including a level sensor system, according to an embodiment. The liquid metal ejector 300, which may also be referred to as a metal ejecting apparatus, is shown installed in place within a 3D printer. It should be understood that some of the features and components shown and described in regard to FIG. 1 may be present in the system represented in FIG. 3, for example, printing material feed system, gas sources, and overall ejector housings, but they are not shown explicitly in FIG. 3 for purposes of clarity. A body 306 of the ejector 300 is made of an upper pump segment 302 and a lower pump segment 308, a structure which defines an inner cavity 304 to receive a metal printing material when combined and pressed to fit into the 3D printer. The body 306 of the ejector 300 includes the discrete and separable upper pump segment 302 and a discrete and separable lower pump segment 308. The upper pump segment 302 is made from boron nitride, although alternate embodiments may have an upper pump segment 302 made from other heat-resistant ceramic or ceramic-coated metal materials such as aluminum oxide, and the like. The lower pump segment 308 is made from graphite, although alternate embodiments may have a lower pump segment 308 made from other inorganic, ceramic, or metal materials such as stainless steel, aluminum oxide, silicon carbide, and the like. The lower pump segment 308 of the liquid metal ejector 300 defines an ejector nozzle 310 or exit nozzle orifice in connection with the inner cavity 304 and configured to eject one or more droplets of a liquid metal comprising a metal printing material. The upper pump segment 302 includes a first sensor pair 314 defining and placed at a vertical location within the upper pump segment 302 correlated to a minimum or lower level of printing material held within the inner cavity 304, as the first sensor pair 314 is in contact with an internal surface of a lower portion of the inner cavity 304. It should be noted that each sensor in the first sensor pair 314 is positioned on a first equivalent horizontal plane relative to one another. The upper pump segment 302 also includes a second sensor pair 312 defining and placed at a vertical location within the upper pump segments 302 correlated to an upper level of printing material within the inner cavity 304, as the second sensor pair 312 is in contact with an internal surface of an upper portion of the inner cavity 304. Additionally, each sensor in the second sensor pair 312 is positioned on a second equivalent horizontal plane relative to one another. In certain embodiments, the first sensor pair and the second sensor pair are fixedly attached to the structure 306 defining the inner cavity 304. In exemplary embodiments, the first sensor pair 314 and second sensor pair 312 are made from or coated with a non-wetting material when in contact with the liquid metal making up the printing material used in the liquid metal ejector 300. The non-wetting material on the first sensor pair 312 and the second sensor pair 314 may be boron nitride or other ceramics or materials non-wetting in contact with a molten metal printing material, such as aluminum oxide, silicon carbide, and the like. The first sensor pair 312 and the second sensor pair 314 are coupled, or electrically connected to a printing material feed system, not shown in FIG. 3, for the purpose of communicating to the printing material feed system the state or level of printing material within the liquid metal ejector 300, such that when the printing material is low, more printing material may be added by a feed mechanism within the printing material feed system, or if the level of printing material in the liquid metal ejector 300 is sufficient, the feed mechanism of the printing material feed system may be stopped.

The liquid metal ejector 300 further includes a heater assembly 316 configured to heat the ejector body defined by the upper pump segment 302 and the lower pump segment 308 and heat a printing material in the inner cavity 304 to change a solid printing material to a liquid within the inner cavity 304 of the liquid metal ejector 300. One or more metallic coils 318 wrapped at least partially around the liquid metal ejector 300 are also shown in FIG. 3. The overall printing system may include a power source, not shown herein. The power source may be coupled to the coils 318 and configured to provide an electrical current to the coils 318. An increasing magnetic field caused by the coils 318 may cause an electromotive force within the ejector cavity 304, that in turn causes an induced electrical current in the printing material held in the inner cavity, but which is not shown here for purposes of clarity. The magnetic field and the induced electrical current in the printing material may create a radially inward force on the printing material, known as a Lorenz force. The Lorenz force creates a pressure at an inlet of the nozzle 310 of the ejector 300. The pressure causes the printing material to be jetted through the nozzle 310 in the form of one or more liquid drops.

Prior to printing operations, when a metal ejector jet is initially filled, both the first, or lower sensor pair and the second, or upper sensor pair would have no bridged contact or connectivity between each of the respective sensor pairs, as the sensor pairs are spaced apart from one another on an equivalent horizontal plane. This state of non-contact sends a signal to the printing material feed system initiating the feed mechanism to begin feeding solid printing material into the inner cavity 304 of the liquid metal ejector 300. As the printing material is fed into the inner cavity 304, and the printing material melts, the level of molten printing material rises within the inner cavity 304. Since the printing material is electrically conductive, the molten printing material will provide connectivity between each sensor in a sensor pair. As the inner cavity fills with printing material, the molten printing material eventually reaches the level of the first, lower sensor pair, at which point the molten printing material will bridge electrical contact between each sensor in the first sensor pair. The printing material feed system is configured to receive a first electrical signal indicative of electrical connection from the first sensor pair when each sensor in the first sensor pair is in contact with the metal printing material. The printing material feed will continue to fill the inner cavity with printing material, as long as there is no contact bridged between the individual sensors in the second, upper sensor pair. Once contact between each sensor in the second, upper sensor pair is bridged via the conductivity of the printing material, the upper sensor pair receives a signal and signals that the ejector jet inner cavity is sufficiently filled. The printing material feed system is configured to receive a second electrical signal indicative of electrical connection from the second sensor pair when each sensor in the second sensor pair is in contact with the metal printing material. The printing material feed stops when conductivity is sensed by both the first, lower sensor pair and second, upper sensor pair. As printing material continues to be jetted, the level drops below the level of the second, upper sensor pair, and the cycle continues, feeding additional printing material until the second, upper sensor pair has bridged connectivity by the presence of the printing material at the sufficient level.

Certain embodiments of such an ejector may have the printing material supply located internal to a housing that includes the liquid ejector. Furthermore, alternate embodiments may include other means of introduction of printing material, such as a powder feed system or other printing material introduction means known to those skilled in the art. Example printing materials which could be ejected using a liquid ejector according to embodiments described herein also include alloys of aluminum, copper, iron, nickel, brasses, naval brass, and bronzes. Silver and alloys thereof, copper and alloys thereof, metallic alloys, braze alloys, or combinations thereof may also be printed using liquid ejectors according to embodiments herein. Certain embodiments may have single piece assemblies rather than having an upper pump and lower pump segment or have additional inserts or pieces that are assembled to form the liquid metal ejector and define the inner cavity thereof. While the conductive sensor pairs described herein are made of steel and coated with a material inert in contact with a molten printing material, other coatings or materials may be used in alternate embodiments. Furthermore, it should be noted that while the sensors and sensor pairs shown herein are integrated into the upper pump segment, and therefore integrated into the liquid metal ejector assembly, alternate embodiments, may have separate, replaceable, or serviceable sensors to be used in accordance with the embodiments described herein.

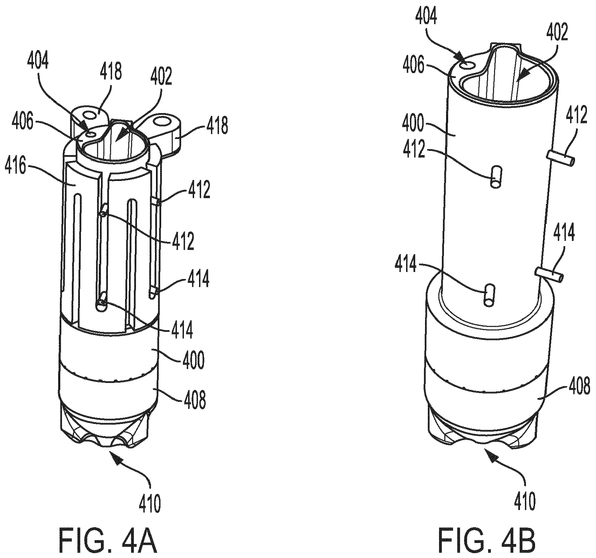

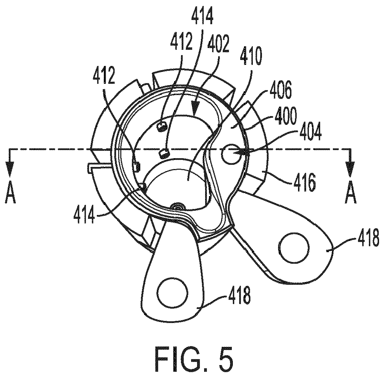

FIGS. 4A and 4B illustrate perspective views of a liquid metal ejector assembly with and without a heater, respectively, according to an embodiment. The liquid metal ejector assembly, as described previously, includes a discrete and separable upper pump segment 400, press fitted into a discrete and separable lower pump segment 408, both of which define an inner cavity 402 structure to hold printing material. Also shown is a printing material port 404 in a printing material inlet 406 segment, which is configured to guide and introduce a wire feed printing material into the inner cavity 402. The lower pump segment 408 also defines an ejector nozzle 410. Also shown are the second, upper sensor pair 412 and the first, lower sensor pair 414, shown in cylindrical probe form, which are in communication with the inner cavity 402 and also protruding externally to communicate externally relative to the liquid ejector assembly, allowing an electrical or connectivity signal to be carried outside of the metal ejector assembly and to a computer system, control system, or printing material feed system in order to provide feedback and control to the level of printing material within the metal ejector. Also shown in the assembly are the heater 416 surrounding a portion of the upper pump segment 400 which also defines two heater mounts 418 for installing and attaching the metal jet assembly into a 3D printing system. FIG. 4B shows the same features and components described in regard to FIG. 4A, but with the heater 416 removed. FIG. 5 is a top perspective view of a liquid metal ejector assembly with a heater, according to an embodiment. The view in FIG. 5 primarily shows an internal view of the inner cavity 402 and the respective locations of the second, upper sensor pair 412 and first, lower sensor pair 414 within the inner cavity 402.

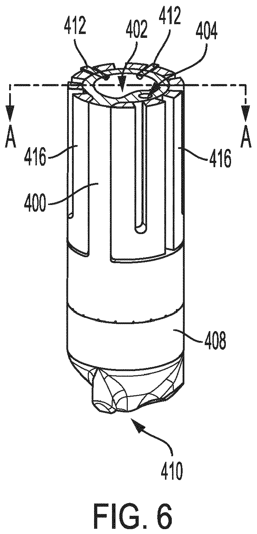

FIG. 6 is a side perspective view, with a cutaway, of a liquid metal ejector assembly with a heater, according to an embodiment. The view in FIG. 6 primarily shows a cutaway view illustrating the respective locations of the second, upper sensor pair 412 and first, lower sensor pair 414 within the inner cavity 402. This view shows that the second, upper sensor pair 412 penetrates through a wall of the upper pump segment 400 and thereby maintains connection between the inner cavity 402 of the upper pump segment 400 and therefore the inside of the metal ejector assembly, as well as connection with the outside, or external portion of the metal ejector assembly, allowing signal to be carried outside of the metal ejector assembly and to a computer system, control system, or printing material feed system in order to provide feedback and control to the level of printing material within the metal ejector.

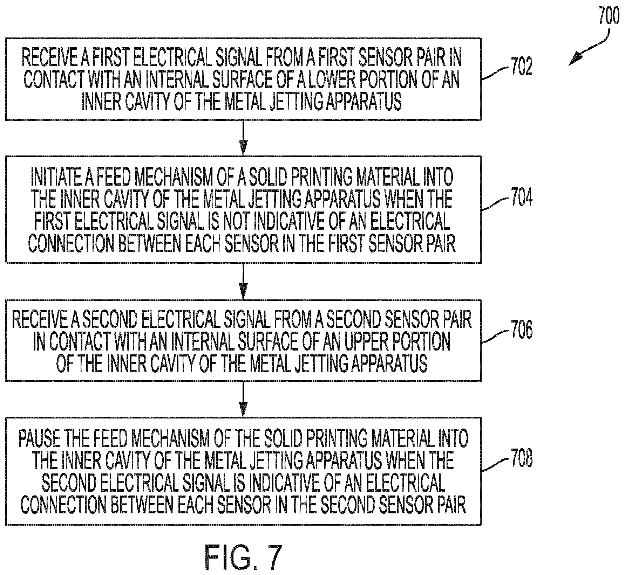

FIG. 7 is a flowchart illustrating a method of level sensing in a liquid metal ejector of a metal jetting printer, according to an embodiment. A method of controlling level in a metal jetting apparatus 700 is illustrated, which includes a step to receive a first electrical signal from a first sensor pair in contact with an internal surface of a lower portion of an inner cavity of the metal jetting apparatus 702. Depending on the nature of the first electrical signal the method proceeds to initiate a feed mechanism of a solid printing material into the inner cavity of the metal jetting apparatus when the first electrical signal is not indicative of electrical connection between each sensor in the first sensor pair 704. The first electrical signal is indicative of electrical connection between each sensor in the first sensor pair when in contact with a molten metal printing material and is not indicative of electrical connection between each sensor in the first sensor pair when not in contact with the molten metal printing material. The electrical conductivity of the printing material, once heated from a solid to a liquid, such that it is in a molten state, bridges the electrical connection signal between each individual sensor in the first sensor pair. Since the first sensor pair is in a lower portion of the inner cavity of the metal jetting apparatus, a received signal from the lower, first sensor pair may be indicative that the level of printing material in the inner cavity is at the lower level correlated with the vertical position of the first sensor pair within the inner cavity. The next step in the method of controlling level in a metal jetting apparatus 700 is to receive a second electrical signal from a second sensor pair in contact with an internal surface of an upper portion of the inner cavity of the metal jetting apparatus 706. The second electrical signal is indicative of electrical connection between each sensor in the second sensor pair when in contact with a molten metal printing material and is not indicative of electrical connection between each sensor in the second sensor pair when not in contact with the molten metal printing material. The concluding step in the method of controlling level in a metal jetting apparatus 700 includes the step to pause the feed mechanism of the solid printing material into the inner cavity of the metal jetting apparatus when the second electrical signal is indicative of electrical connection between each sensor in the second sensor pair 708. This pause in the feeding mechanism is executed when the molten printing material is in contact with each of the second sensor pair, and thus bridges the electrical connection between each sensor in the second sensor pair. This is consistent with the level of printing material reaching the level at which the second sensor pair is located. Since the printing material is at a sufficient level, the feed mechanism may be paused. Certain embodiments of the method of controlling level in a metal jetting apparatus 700 may further include initiating the feed mechanism of the solid printing material into the inner cavity of the metal jetting apparatus when the second electrical signal is not indicative of electrical connection between each sensor in the second sensor pair. This absence of electrical connection is due to no printing material bridging connection between the second sensor pair and therefore not being at a sufficient level where the second sensor pair is located. This gives the feed mechanism the signal or instructions to continue feeding printing material into the inner cavity until the level of the second sensors is reached. The method of controlling level in a metal jetting apparatus 700 further includes continuing the feed mechanism of the solid printing material into the inner cavity of the metal jetting apparatus when the first electrical signal is indicative of electrical connection between each sensor in the first sensor pair and the second electrical signal is not indicative of electrical connection between each sensor in the second sensor pair. This combination of signals means that the printing material has reached a lower level correlated to the vertical location of the first sensor pair but not the higher vertical level correlated to the upper location of the second sensor pair in the inner cavity. Therefore, the feed mechanism continues to supply additional printing material into the inner cavity of the metal jetting apparatus. The method of controlling level in a metal jetting apparatus 700 requires that the printing material is electrically conductive, and may be, but is not limited to a printing material including a metal, a metallic alloy, or a combination thereof. Exemplary examples of printing materials which could be used as described herein also include alloys of aluminum, copper, iron, nickel, brasses, naval brass, and bronzes. Silver and alloys thereof, copper and alloys thereof, metallic alloys, braze alloys, or combinations thereof may also be printed using liquid ejectors, controlled, and used in sensing methods and systems according to embodiments herein. It should be noted that this method of sensing and controlling level is not dependent upon reading a level signal reflected from a surface of a melt pool in the inner cavity of a metal jetting apparatus using a sensor, which may be disrupted by the presence of dross. However, it should also be noted that a laser level sensor may be used as a companion or redundant method of sensing level within an inner cavity of a liquid metal ejector in accordance with the present disclosure.

The use of discrete sets of conductive sensors to ensure the molten aluminum in a 3D metal printer is in the nominal range may replace alternate level sensing apparatus and methods, such as laser level sensing systems and accompanying control schemes. Thus, in accordance with the present disclosure, the conductive sensors can determine if the molten aluminum, or alternate printing material, level is outside upper and lower limits and then be used to control the printing material wire feed into the inner cavity to ensure the printing material levels are properly maintained to stay withing upper and lower boundaries during printing operations. This results in a sensing system to protect against over or under filling the system by adjusting the wire feed system by either adding or stopping the amount of wire being fed into the pump. This sensing system described herein is also robust to dross surface buildup by using molten print material conductivity rather than surface reflectance of a laser-based level control system that can be negatively impacted by dross buildup. The control and sensing method and sensing apparatus described herein may enable larger jetted throughput in an 8-hour period or other pre-determined operation interval. The print run time in between shutting down due to level-sense failures may be increased, which allows for larger size part builds, longer time between pump replacement, improved jetting performance during print jobs.

While the present teachings have been illustrated with respect to one or more implementations, alterations and/or modifications may be made to the illustrated examples without departing from the spirit and scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of' is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with a true scope and spirit of the present teachings being indicated by the following claims.

## Claims

1. A metal ejecting apparatus, comprising:
a structure defining an inner cavity to receive a metal printing material;
a nozzle orifice in connection with the inner cavity and configured to eject one or more droplets of a liquid metal comprising the metal printing material; and
a first sensor pair in contact with an internal surface of a lower portion of the inner cavity.

2. The metal ejecting apparatus of claim 1, wherein each sensor in the first sensor pair is positioned on a first equivalent horizontal plane.

3. The metal ejecting apparatus of claim 1, further comprising a second sensor pair in contact with an internal surface of an upper portion of the inner cavity, optionally, wherein each sensor in the second sensor pair is positioned on a second equivalent horizontal plane.

4. The metal ejecting apparatus of claim 1, further comprising a heating element configured to heat a solid in the inner cavity of the metal ejecting apparatus, thereby causing the solid to change to a liquid within the metal ejecting apparatus.

5. The metal ejecting apparatus of claim 1, further comprising:
a coil wrapped at least partially around the metal ejecting apparatus; and
a power source configured to supply one or more pulses of power to the coil, which cause one or more droplets of liquid metal to be jetted out of the nozzle orifice.

6. The metal ejecting apparatus of claim 3, wherein the first sensor pair and the second sensor pair are fixedly attached to the structure defining the inner cavity.

7. The metal ejecting apparatus of claim 3, wherein the first sensor pair comprise a non-wetting material when in contact with the liquid metal and the second sensor pair comprise a non-wetting material when in contact with the liquid metal, optionally, wherein the non-wetting material on the first sensor pair comprise boron nitride and non-wetting material on the second sensor pair comprise boron nitride.

8. The metal ejecting apparatus of claim 1, wherein the first sensor pair is electrically connected to a printing material feed system.

9. The metal ejecting apparatus of claim 3, wherein the second sensor pair is electrically connected to a printing material feed system.

10. The metal ejecting apparatus of claim 1, wherein the metal ejecting apparatus further comprises a discrete and separable upper pump segment and a discrete and separable lower pump segment, optionally, wherein the first sensor pair is fixedly attached to the upper pump segment.

11. The metal ejecting apparatus of claim 3, wherein:
a printing material feed system is configured to receive a first electrical signal indicative of an electrical connection from the first sensor pair when the metal printing material bridges the electrical connection between each sensor in the first sensor pair; and
the printing material feed system is configured to receive a second electrical signal indicative of an electrical connection from the second sensor pair when the metal printing material bridges the electrical connection between each sensor in the first sensor pair.

12. A metal ejecting apparatus, comprising:
a structure defining an inner cavity to receive a metal printing material, the structure comprising a discrete and separable upper pump segment and a discrete and separable lower pump segment;
a nozzle orifice in connection with the inner cavity and configured to eject one or more droplets of a liquid metal comprising the metal printing material;
a first sensor pair in contact with an internal surface of the inner cavity and fixedly attached to a lower portion of the upper pump segment; and
a second sensor pair in contact with an internal surface of the inner cavity and fixedly attached to an upper portion of the upper pump segment.

13. The metal ejecting apparatus of claim 12, further comprising:
a heating element configured to heat a solid in the inner cavity of the metal ejecting apparatus, thereby causing the solid to change to a liquid within the metal ejecting apparatus; and
a coil wrapped at least partially around the metal ejecting apparatus; and
a power source configured to supply one or more pulses of power to the coil, which cause one or more droplets of liquid metal to be jetted out of the nozzle orifice.

14. The metal ejecting apparatus of claim 12, wherein:
each sensor in the first sensor pair is positioned on first equivalent horizontal plane; and
each sensor in the second sensor pair is positioned on a second equivalent horizontal plane.

15. The metal ejecting apparatus of claim 1 or claim 12, wherein the upper pump segment comprises boron nitride or wherein the lower pump segment comprises graphite.

16. A method of controlling level in a metal jetting apparatus, comprising:
receiving a first electrical signal from a first sensor pair in contact with an internal surface of a lower portion of an inner cavity of the metal jetting apparatus;
initiating a feed mechanism of a solid printing material into the inner cavity of the metal jetting apparatus when the first electrical signal is not indicative of an electrical connection between each sensor in the first sensor pair;
receiving a second electrical signal from a second sensor pair in contact with an internal surface of an upper portion of the inner cavity of the metal jetting apparatus; and
pausing the feed mechanism of the solid printing material into the inner cavity of the metal jetting apparatus when the second electrical signal is indicative of an electrical connection between each sensor in the second sensor pair.

17. The method of controlling level in a metal jetting apparatus of claim 16, further comprising initiating the feed mechanism of the solid printing material into the inner cavity of the metal jetting apparatus when the second electrical signal is not indicative of electrical connection between each sensor in the second sensor pair.

18. The method of controlling level in a metal jetting apparatus of claim 16, further comprising continuing the feed mechanism of the solid printing material into the inner cavity of the metal jetting apparatus when the first electrical signal is indicative of electrical connection between each sensor in the first sensor pair and the second electrical signal is not indicative of electrical connection between each sensor in the second sensor pair.

19. The method of controlling level in a metal jetting apparatus of claim 16, wherein the printing material comprises a metal, a metallic alloy, or a combination thereof, optionally, wherein the printing material comprises aluminum.

20. The method of controlling level in a metal jetting apparatus of claim 16, wherein:
the first electrical signal is indicative of electrical connection between each sensor in the first sensor pair when in contact with a molten metal printing material; and
the first electrical signal is not indicative of electrical connection between each sensor in the first sensor pair when not in contact with the molten metal printing material.

21. The method of controlling level in a metal jetting apparatus of claim 16, wherein:
the second electrical signal is indicative of electrical connection between each sensor in the second sensor pair when in contact with a molten metal printing material; and
the second electrical signal is not indicative of electrical connection between each sensor in the second sensor pair when not in contact with the molten metal printing material.
